# EUROPÄISCHE PATENTSCHRIFT

(11) **EP 1 754 030 B1**
(45) Veröffentlichungstag und Bekanntmachung des Hinweises auf die Patenterteilung: **13.12.2017**
(21) Anmeldenummer: 05750528.1
(22) Anmeldetag: 02.06.2005
(51) Int. Cl.: G01G 23/00

(54) **ÜBERLASTSICHERUNG FÜR EIN KRAFTMESSELEMENT**
OVERLOAD PROTECTION FOR A FORCE MEASURING ELEMENT
SECURITE ANTISURCHARGE POUR ELEMENT DYNAMOMETRIQUE

(30) Priorität: 05.06.2004 DE 102004027619
(43) Veröffentlichungstag der Anmeldung: 21.02.2007
(73) Patentinhaber: Hottinger Baldwin Messtechnik GmbH, 64293 Darmstadt (DE)
(72) Erfinder: SCHERER, Ralf, 55122 Mainz (DE)
(74) Vertreter: Staudte, Ralph
(86) Internationale Anmeldenummer: PCT/EP2005/005941
(87) Internationale Veröffentlichungsnummer: WO 2005/121721

(56) Entgegenhaltungen:
- DE-A1- 3 148 670
- DE-A1- 3 225 857
- US-A- 3 646 809
- US-A- 5 247 840
- US-B1- 6 257 075

## Beschreibung

Die Erfindung betrifft eine Überlastsicherung für ein Kraftmesselement gemäß dem Oberbegriff des Patentanspruchs 1.

Derartige Überlastsicherungen werden vorzugsweise bei Wägeeinrichtungen benötigt, in denen Kraftmesselemente zur Gewichtserfassung vorgesehen sind. Dabei bestehen die Kraftmesselemente meist aus einem beweglichen Krafteinleitungsteil und einem fest eingespannten Kraftaufnahmeteil, zwischen denen ein Verformungskörper angeordnet ist, der mit Messumformern versehen ist, die meist als Dehnungsmessstreifen ausgebildet sind. Diese Dehnungsmessstreifen bestehen vorzugsweise aus einem aufgedampften Messgitter, das bei Überschreitung einer vorgesehenen Dehnung leicht beschädigt oder zerstört werden kann. Deshalb ist es häufig notwendig, eine Überdehnung des Verformungskörpers durch eine Überlastsicherung zu verhindern.

Eine derartige Überlastsicherung für ein Kraftmesselement ist aus der DE 42 32 568 C2 bekannt, die in einer zylinderförmigen Kraftmesszelle bzw. Wägezelle integriert ist. Dabei ist unter dem beweglichen Krafteinleitungsteil im biegesteifen Kraftaufnahmeteil ein Gewindebolzen mit einem Feingewinde vorgesehen, der den beweglichen Krafteinleitungsteil in seiner vertikalen Bewegung begrenzt. Dazu wird der Gewindebolzen auf einen maximal zulässigen Spaltabstand zum beweglichen Krafteinleitungsteil einjustiert, der dann eine Überlastung bzw. Überdehnung der Dehnungsmessstreifen auf dem zylindrischen Verformungskörper verhindert. Da derartige Spaltabstände wegen der geringen vertikalen Durchbiegung des Krafteinleitungsteils auf wenige Zehntel Millimeter genau eingestellt werden müssen, sind hierzu genaue manuelle Justierarbeiten notwendig, die jeweils bei jeder Wägezelle durchgeführt werden müssen und den Fertigungsaufwand nicht unerheblich erhöhen.

Aus der DE 27 53 549 C2 ist ebenfalls eine Überlastsicherung an einem Kraftmesselement bekannt, das einen definierten vorgefertigten Spaltabstand zwischen dem beweglichen Teil des Kraftmesselements und der Überlastsicherung vorsieht. Dabei ist in einem Kraftmesselement, das als Doppelbiegebalken ausgebildet ist, quer zur Krafteinleitungsrichtung und in Längsrichtung des Doppelbiegebalkens eine Langlochbohrung vorgesehen, in der ein zylinderförmiger Überlaststab angeordnet ist. Der Überlaststab ist am Einspannende bzw. am Kraftaufnahmeteil des Doppelbiegebalkens fest in die Bohrung eingepresst und hat in der Bohrung des beweglichen Teils des Biegebalkens ein vorgegebenes Spiel. Dazu ist die Bohrung in ihrem Durchmesser mindestens um den maximal zulässigen Bewegungsbereich größer als der Überlaststab, so dass um diesen ein definierter Ringspalt entsteht. Dieser Ringspalt begrenzt den Bewegungsbereich des Krafteinleitungsteils, um eine Überlastung der Dehnungsmessstreifen an den Verformungskörpern des Biegebalkens zu verhindern. Dieser Überlastschutz ist aber nur längs um eine zentrale Längsachse angeordnet, so dass bei einer außermittigen Krafteinleitung eine Verdrehung des Biegebalkens eintreten kann, bei der der vertikale Bewegungsbereich durch den Ringspalt nicht sicher begrenzbar ist.

Eine derartige verdrehsichere Begrenzung des vertikalen Bewegungsbereichs bei einer Überlastsicherung eines Doppelbiegebalkens ist aus der DE 43 13 932 A1 bekannt. Bei dieser Überlastsicherung ist parallel zum Doppelbiegebalken ein anschraubbarer Zusatzbalken vorgesehen, der den vertikalen Bewegungsbereich des beweglichen Teils des Biegebalkens begrenzt. Dazu ist am beweglichen Teil bzw. dem Krafteinleitungsteil des Biegebalkens ein Anschlagkopf befestigt, in dessen vorgesehene Aussparung das Ende des Überlastbalkens hineinragt. Dabei greift das eine Ende des Überlastbalkens so in die Aussparung des Anschlagkopfes ein, dass der vertikale Bewegungsbereich des beweglichen Biegebalkenteils durch eine vorgesehene Spaltbreite nach oben und unten begrenzt wird. Da der Überlastbalken etwa halb so breit wie der Doppelbiegebalken ausgeführt ist, wird durch die parallel zur Breite an der Unterseite des Biegebalkens verlaufenden Begrenzungsspalte eine verdrehsichere Begrenzung der vertikalen Ausbiegung erreicht. Allerdings müssen bei dieser Überlastsicherung die Spaltbreiten in Wägerichtung durch eine Schräge am Überlastbalken und einen dazu verschiebbaren Anschlagkopf sehr genau einjustiert werden, um eine sichere Überlastung der Dehnungsmessstreifen unter Berücksichtigung des Nennlastbereichs zu verhindern. Diese Überlastsicherung hat den Nachteil, dass bei den heute überwiegend maschinell herstellbaren Doppelbiegebalken die Überlastsicherung noch manuell angeschraubt und deren geringe Spaltbreiten noch zusätzlich einjustiert werden müssen, was den Herstellungsaufwand des Kraftmesselements erhöht.

Aus der DE 32 25 857 A1 ist ein Kraftmesselement mit einer Überlastsicherung bekannt, das als eine Art Doppelbiegebalken ausgebildet ist. Dabei ist der Doppelbiegebalken auf einer Seite mit seinem Kraftaufnahmeteil an einem stationären Grundkörper befestigt. Der Grundkörper ist parallel zum Doppelbiegebalken angeordnet und hat einen quadratischen Querschnitt, dessen Größe etwa dem Querschnitt des Doppelbiegebalkens entspricht. Im Grundkörper ist eine zentrale Bohrung quer zu seiner axialen Erstreckung eingebracht, die bis in den Hohlraum des darüber angeordneten Biegebalkens hineinragt. In diese Bohrung ist ein Kraftübertragungsbolzen eingesetzt, der im Bohrungsteil des Doppelbiegebalkens mit diesem verschweißt ist und bei einer Kraftbeaufschlagung den beweglichen Teil des Doppelbiegebalkens verformt, um in den applizierten Dehnungsmessstreifen ein Messsignal zu erzeugen. Zum Schutz der Dehnungsmessstreifen ist im Grundkörper unterhalb des Biegeelements eine Überlastsicherung seitlich neben dem Kraftübertragungsbolzen vorgesehen. Damit wird der Kraftübertragungsweg des Bolzens axial begrenzt. Dazu sind in einer Ebene neben dem Bolzen zwei Querbohrungen im Grundkörper und im Kraftübertragungsbolzen etwa je zur Hälfte ihres Querschnitts eingebracht. In jeder Querbohrung ist je ein Rundstift fixiert, dessen Durchmesser im Bereich des Kraftübertragungsbolzens etwas verringert ist und dadurch einen Spalt zu dessen innerem Mantelflächenteil bildet. Durch diesen Spalt wird die Bewegung des Kraftübertragungsbolzens und damit auch der Hub des beweglichen Teils des Biegebalkens beim Anschlagen an die Rundstifte begrenzt. Zur Überlastsicherung ist dabei aber parallel zum Biegebalken ein zusätzlicher Parallelbalken erforderlich, der einen erheblichen zusätzlichen Bauraum für die Überlastsicherung notwendig macht. Dabei sind die Herstellung und Montage der Überlastsicherung verhältnismäßig aufwendig, da neben dem Parallelbalken noch ein Kraftübertragungsbolzen und zwei in der Mitte abgedrehte Passstifte erforderlich sind. Zur Montage muss dabei offensichtlich zunächst der Kraftübertragungsbolzen im beweglichen Teil des Biegebalkens verschweißt werden, um danach die Bohrungen einzubringen, in welchen die um das Spaltmaß abgedrehten Passstifte fixiert werden. Dies dürfte nur durch eine manuelle Montagetätigkeit durchführbar sein.

Der Erfindung liegt deshalb die Aufgabe zugrunde, eine Überlastsicherung so in das Kraftmesselement zu integrieren, dass dieses weitgehend maschinell herstellbar ist und keine manuellen Justierarbeiten erfordert sowie auch bei einer außermittigen Krafteinleitung eine Überlastung der Dehnungsmessstreifen sicher verhindert.

Diese Aufgabe wird durch die in Patentanspruch 1 angegebene Erfindung gelöst. Weiterbildungen und vorteilhafte Ausführungsbeispiele sind in den Unteransprüchen angegeben.

Die Erfindung hat den Vorteil, dass die Herausarbeitung des Überlastschutzes für das Kraftmesselement weitgehend durch den gleichen Fräsvorgang wie den des Biegebalkengrundkörpers erfolgen kann, da dies meist vollautomatisch mittels programmgesteuerter Werkzeugmaschinen geschieht. Da der Überlastbalken insbesondere bei einem Doppelbiegebalken aus dem Vollmaterial zwischen den beiden Verformungskörpern herausgearbeitet wird, ist ein derartiger Überlastschutz vorteilhafterweise auch kostengünstig und platzsparend herstellbar. Durch die Herausarbeitung des Überlastbalkens aus dem Biegebalkenvollmaterial und den Einsatz frei erhältlicher Passstifte als Serienteile erfordert die Herstellung des Überlastschutzes nahezu keine zusätzliche Montagezeit und keine manuellen Justierarbeiten.

Die Erfindung hat weiterhin den Vorteil, dass durch den Einsatz von Passstiften zur Herstellung von derart kleinen Spalt= abständen von wenigen zehntel Millimetern diese auf einfache Weise durch spanabhebende Bearbeitungsverfahren mit relativ großen Werkzeugen herstellbar sind und nicht wie sonst üblich durch ein aufwändiges Drahterodierverfahren gefertigt werden müssen. Da derartige Passstifte in hohen Genauigkeitsklassen (H7-Passung) als kostengünstige Serienteile erhältlich sind, können vorteilhafterweise mit einfachsten Bearbeitungsverfahren die sehr kleinen Spaltweiten sehr genau hergestellt werden, so dass die erfindungsgemäße Überlastsicherung sehr zuverlässig die Dehnungsmessstreifen vor auftretenden Überlastungen schützt.

Durch die quer zur Längsrichtung angeordneten Passstifte wird vorteilhafterweise gleichzeitig erreicht, dass die Überlastsicherung gleichmäßig über die gesamte Breite des Kraftmesselements wirksam ist, so dass insbesondere eine Verdrehung des Biegebalkens um die Längsachse bei außermittiger Krafteinleitung verhindert wird.

Bei einer besonderen Ausführung der Erfindung ist vorgesehen, zwei Passstifte zur Begrenzung des beweglichen Biegebalkenteils in beiden vertikalen Richtungen einzusetzen, wodurch vorteilhafterweise gleichzeitig ein Überlastschutz in Zug- und Druckrichtung erreichbar ist, der die Dehnungsmessstreifen in den beiden möglichen Bewegungsrichtungen des Kraftmesselements vor Überlastung schützt.

Eine weitere besondere Ausführung der Erfindung sieht vor, dass die Passstifte zylinderförmig ausgebildet sind, woraus sich der Vorteil ergibt, dass die Passstifte in einer Aussparung von mehr als 180° eingesteckt werden können, und so ohne zusätzliche Befestigungsmittel in Bewegungsrichtung fixierbar sind. Insbesondere der Einsatz der zylinderförmigen Passstifte hat den Vorteil, dass im Überlastfall der bewegliche Teil des Biegebalkens formschlüssig in der Aussparung des Begrenzungselements aufliegt, so dass auch bei hohen Überlastkräften sich eine vergleichsweise geringe Flächenbelastung ergibt. Dies hat gleichzeitig den Vorteil, dass auch bei häufigen und hohen Überlastungen des Kraftmesselements weder die Überlastsicherung verschleißt noch die Gefahr besteht, dass sich die Spaltabstände verändern, so dass eine hohe Lebensdauer des Kraftmesselements erreichbar ist.

Die Erfindung wird anhand eines Ausführungsbeispiels, das in der Zeichnung dargestellt ist, näher erläutert. Es zeigen:
- Fig. 1:: eine Abbildung eines Kraftmesselements mit integrierter Überlastsicherung, und
- Fig. 2:: einen vergrößerten Ausschnitt aus der Überlastsicherung mit einem Anschlagkopf.

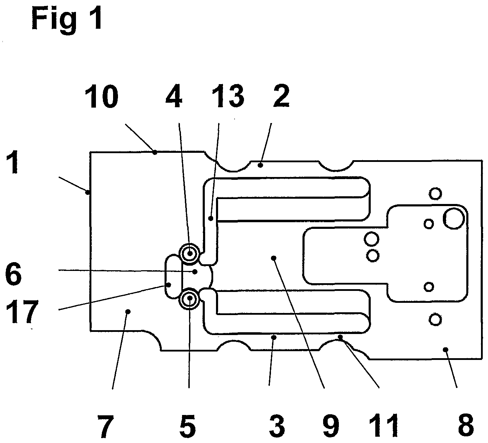

In Fig. 1 der Zeichnung ist ein Kraftmesselement in Form eines Doppelbiegebalkens 1 mit Überlastsicherung dargestellt, die im Wesentlichen aus einem zwischen den Biegebalken 2, 3 angeordneten Überlastbalken 9 besteht, dessen Anschlagkopf 6 in eine Aussparung 17 mit zwei Passstiften 4, 5 des beweglichen Teils 7 des Doppelbiegebalkens 1 hineinragt, wobei zwischen den Passstiften 4, 5 und dem Anschlagkopf 6 ein definierter Spalt 18, 19 belassen ist.

Das als Doppelbiegebalken 1 ausgebildete Kraftmesselement besteht im Wesentlichen aus einem Krafteinleitungsteil 7 und einem Kraftaufnahmeteil 8, die durch zwei Biegebalken 2, 3 verbunden sind. Der Krafteinleitungsteil 7 stellt den beweglichen Teil des Kraftmesselements dar und wird beispielsweise in einer Waage mit der zu messenden Gewichtskraft beaufschlagt. Dieser Krafteinleitungsteil 7 ist etwa quaderförmig ausgebildet, wobei seine obere Deckfläche 10 meist zur Krafteinleitung dient. Der gegenüber dem Krafteinleitungsteil 7 angeordnete Kraftaufnahmeteil 8 ist ebenfalls quaderförmig ausgebildet und stellt das Einspannende des Kraftmesselements 1 dar, das meist fest an einer Waage oder dessen Rahmenteil befestigt ist.

Der Doppelbiegebalken 1 wird aus einem Längsbalken aus Vollmaterial, vorzugsweise Aluminium oder Edelstahl hergestellt, aus dem die beiden Biegebalken 2, 3 meist durch Fräs- oder Bohrvorgänge herausgearbeitet werden. Dabei weisen die beiden Biegebalken 2, 3 in der Regel eine oder zwei Dünnstellen 11 auf und bilden dadurch einen Verformungskörper, an dem die nicht dargestellten Dehnungsmessstreifen als Messumformer appliziert sind. Bei einer Kraftbelastung entsteht an der Oberfläche der Verformungskörper eine Biegespannung, die der eingeleiteten Kraft proportional ist und die von den Messumformern in ein elektrisches Signal umgewandelt wird.

In dem rechteckigen Hohlraum zwischen den beiden Biegebalken 2, 3 ist zur Überlastsicherung ein zusätzlicher Balken als Überlastbalken 9 angeordnet, der ebenfalls aus dem ursprünglichen Vollmaterial herausgearbeitet ist. Dieser Überlastbalken 9 ist fest mit dem Einspannende 8 bzw. dem Kraftaufnahmeteil des Biegebalkens 1 verbunden. Der Überlastbalken 9 füllt im Wesentlichen den Zwischenraum zwischen den beiden Biegebalken 2, 3 aus und entspricht auch in seiner Breite bzw. Tiefe etwa der Breite des Doppelbiegebalkens 1. Dabei hängen sowohl die Höhe als auch die Tiefe des Überlastbalkens 9 im Wesentlichen von der aufzunehmenden Überlastkraft ab, die beim dargestellten Ausführungsbeispiel mindestens dem Zehnfachen der Nennbelastung entspricht, ohne dass dabei die Messumformer beschädigt oder zerstört werden können.

Am Ende des Überlastbalkens 9 ist ein schmalerer Teil angeordnet, der einen Anschlagkopf 6 darstellt und der in eine Aussparung 17 des beweglichen Teils 7 bzw. des Krafteinleitungsteils hineinragt. Sowohl die Aussparung 17 als auch der Anschlagkopf 6 sind durch gefräste Bohrungen und Schlitze aus dem Balkenvollmaterial herausgearbeitet und erfordern keinerlei Montagevorgänge. Dabei wird die Aussparung 17 im Wesentlichen durch drei vertikale Nuten 12, 14 und zwei die Nuten verbindende Bohrungen 15, 16 gebildet.

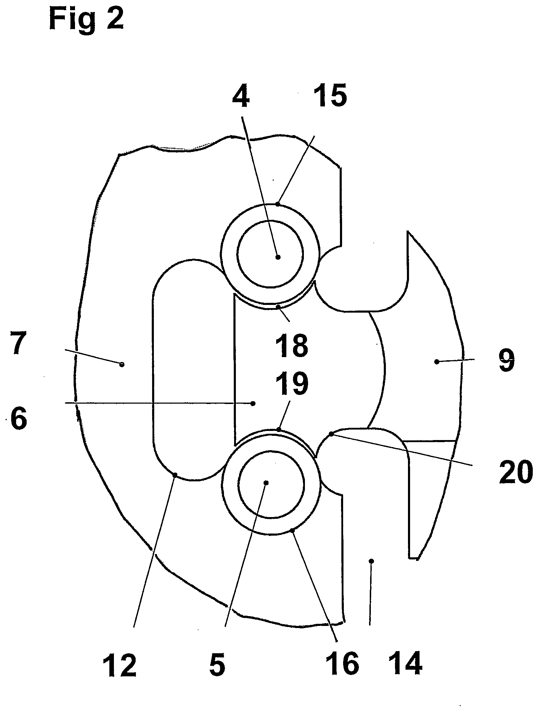

Dies ist im Einzelnen auch in der Vergrößerung des Anschlagkopfes 6 in Fig. 2 der Zeichnung dargestellt. Dabei wird die Länge des Anschlagkopfes 6 durch eine vertikale Längsnut 12 begrenzt, die quer durch die Breite des beweglichen Teils 7 verläuft und den Anschlagkopf etwa 10 mm in den Krafteinleitungsteil 7 hineinragen lässt. Zur Herstellung der vertikalen Innenwand 13 des Krafteinleitungsteils 7 und der Stirnfläche des breiteren Teils des Überlastbalkens 9 sind zwei weitere gegenläufige vertikale Nuten 14 eingefräst, die an ihren Enden am Anschlagkopf 6 eine horizontale runde Einbuchtung 20 zum Krafteinleitungsteil 7 aufweisen. Zwischen den Einbuchtungen 20 und den Endpunkten der vertikalen Längsnut 12 sind eine untere Bohrung 16 und eine obere Bohrung 15 angebracht, die jeweils die vertikale Längsnut 12 mit den Einbuchtungen 20 der gegenläufigen vertikalen Nuten 14 verbinden. Dadurch wird der Anschlagkopf 6 gebildet, der in die durch die Nuten 12, 14 und Bohrungen 15, 16 hergestellte Aussparung 17 hineinragt.

Die Bohrungen 15, 16 stellen dabei einen Teil der gesamten Aussparung 17 dar und erstrecken sich jeweils mit einem Teil in den Krafteinleitungsteil 7 und mit dem anderen Teil in den Anschlagkopf 6 des Überlastbalkens 9. Dabei ist jede Bohrung 15, 16 so angeordnet, dass sie sich mit mehr als 180°, vorzugsweise 200°, in den Bereich des Krafteinleitungsteils 7 und vorzugsweise mit ca. 160° in den Bereich des Anschlagkopfes 6 hinein erstreckt. Diese Bohrungen 15, 16 sind mit programmgesteuerten Werkzeugmaschinen auch sehr genau herstellbar, so dass sie später mit einem seriell hergestellten sehr genauen zylindrischen Passstift 4, 5 der Genauigkeitsklasse H7-Passung bestückt werden können. Durch den Bohrungsanteil von mehr als 180° im Krafteinleitungsteil 7 können die Passstifte 4, 5 in diesen Bohrungsteil eingeschoben oder eingepresst werden, ohne dass die Passstifte 4, 5 aus diesem Bohrungsteil nach oben oder unten herausfallen können, so dass es keiner weiteren Befestigung mehr bedarf. Bei vorzugsweise 6 mm dicken Passstiften 4, 5 werden die Bohrungen 15, 16 allerdings im Bereich des Anschlagkopfes 6 in ihrem Radius um vorzugsweise 0,3 mm vergrößert. Dadurch entsteht bei eingesetzten Passstiften 4, 5 zwischen dem Bohrungsteil im Anschlagkopf 6 und der gegenüberliegenden Mantelfläche der Passstifte 4, 5 ein definierter Spalt 18, 19 von vorzugsweise 0,3 mm Breite, der den beweglichen Teil 7 des Doppelbiegebalkens 1 in seiner vertikalen Auslenkung begrenzt.

Die Spaltbreite 18, 19 wird dabei so bemessen, dass sie mindestens der vertikalen Bewegung bei Nennbelastung entspricht und zusätzlich eine vorgegebene, nicht die Dehnungsmessstreifen schädigende Überlastung berücksichtigt. Dabei wird der Bewegungsbereich des Krafteinleitungsteils 7 bei einer vorgegebenen Überlastung dadurch begrenzt, dass der Passstift 4, 5 formschlüssig in dem Bohrungsteil des Anschlagkopfes 6 anliegt. Zur Überlastsicherung in Wägerichtung ist lediglich der obere Passstift 4 zur Überlastsicherung mit einer Druckbelastung vorgesehen. Hingegen ist der untere Passstift 5 als Überlastsicherung in Zugrichtung vorgesehen, die bei Wägeeinrichtungen während des Transports oder bei Service- und Reinigungsarbeiten häufiger auftreten.

Bei Doppelbiegebalken 1 für Wägeeinrichtungen werden bei Nennbelastung meist nur Vertikalbewegungen von 0,05 mm bis 0,15 mm vorgesehen, so dass für derartige Überlastsicherungen Spaltweiten von 0,1 mm bis 0,5 mm ausreichen, die ohne besonderen Fertigungsaufwand beliebig aus dem Anschlagkopf 6 ausfräsbar sind und keiner weiteren Einstellung oder Justierung bedürfen. Dabei ist besonders vorteilhaft, dass aufgrund der relativ großen Bohrungsdurchmesser (≥ 6 mm Ø) mit normalen Fräswerkzeugen unter höchster Genauigkeit die vorgesehenen Spaltbreiten von 0,1 mm bis 0,5 mm herstellbar sind. Auch das Einsetzen der Passstifte 4, 5 bedarf keiner besonderen manuellen Montage, da diese als Serienteile in beliebigen Längen und gestuften Dicken angeboten werden und in den vorgesehenen Bohrungsteil automatisch einpress- oder einsetzbar sind. Es ist aber auch denkbar, die Passstifte 4, 5 durch Schweiß- oder Klebvorgänge in den Bohrungen 15, 16 zu fixieren. Zum Freihalten der Überlastspalte 18, 19 vor Verschmutzung oder anderen Beeinträchtigungen werden meist Gehäuse vorgesehen, die gleichzeitig auch die Messumformer und deren Verbindungsleitungen schützen. Es ist aber auch denkbar, die Spalte 18, 19 mit plastischen Abdichtungsmaterialien zu verschließen, die so weich und elastisch sind, dass sie bis zum Erreichen der Nennbelastung keine Kraftnebenkopplung verursachen.

Bei lose aufliegenden Krafteinleitungs- oder Wägeteilen ist zur Überlastsicherung im Grunde nur der obere Teil der Überlastsicherung mit jeweils einer Bohrung 15 und einem Passstift 4 notwendig. Dabei können die Passstifte 4, 5 nicht nur zylinderförmig, sondern auch eckig oder in anderen Rundformen ausgebildet sein. Die Bohrungen müssen aber dann auch in entsprechenden Aussparungsformen vorgesehen werden. Dabei sind insbesondere rechteckförmige oder quadratische Passstifte vorteilhaft, die auch als Serienteile in hohen Genauigkeitsklassen angeboten werden. Entsprechende rechteckige oder quadratische Querschnitte der Aussparungen bzw. Aussparungsteile 15, 16 sind mit programmgesteuerten Fräsmaschinen auf einfache Weise und in hoher Genauigkeit ausführbar. Derartige Überlastsicherungen sind nicht nur für Doppelbiegebalkenaufnehmer 1 ausführbar, sondern können auch für Einfach- oder andere Mehrfachbiegebalken vorgesehen werden. Dabei kann der Anschlagkopf 6 auch am Krafteinleitungsteil 7 angeordnet sein, wobei dieser dann in eine Aussparung 17 in dem Überlastbalken 9 eingreift.

Im Grunde könnte der Anschlagkopf 6 auch in das Einspannende 8 hineinragen und dort den vertikalen Bewegungsweg des beweglichen Teils 7 des Biegebalkens begrenzen. Dies würde aber eine verschlechterte Ausführungsart darstellen, da der dann beweglich angeordnete Überlastbalken 9 eine Hebelarmübersetzung erfahren würde, die je nach Hebelarmlänge verschiedene Spaltbreiten 18, 19 erforderlich machen würde. Bei einer alternativen Ausführung der Erfindung können die Passstifte 4, 5 auch am Anschlagkopf 6 befestigt werden, wobei dann die Überlastspalte 18, 19 am Aussparungsteil bzw. Bohrungsteil 15, 16 des Krafteinleitungsteils 7 vorzusehen sind.

## Patentansprüche

1. Überlastsicherung für ein Kraftmesselement, das als Doppel- oder Mehrfachbiegebalken (1) mit Messumformern ausgebildet ist und ein sich quer zur Krafteinleitungsrichtung erstreckendes Begrenzungselement enthält, welches fest mit dem Einspannende bzw. dem Kraftaufnahmeteil (8) des Kraftmesselements verbunden ist, wobei der bewegliche Teil (7) des Doppel- oder Mehrfachbiegebalkens (1) und das Begrenzungselement durch einen Spalt so voneinander beabstandet sind, dass die Durchbiegung des beweglichen Teils (7) begrenzt wird, **dadurch gekennzeichnet, dass** das Begrenzungselement als Überlastbalken (9) ausgebildet ist, der mindestens im Zwischenraum zwischen zwei benachbarten Verformungskörpern bzw. Biegebalken (2, 3) angeordnet ist und an dessen Ende ein Anschlagkopf (6) ausgebildet ist, wobei der Anschlagkopf (6) in eine Aussparung (17) des beweglichen Teils (7) des Doppel- oder Mehrfachbiegebalkens (1) hineinragt, die Aussparung (17) mindestens einen quer zur Balkenlängsrichtung verlaufenden Aussparungsteil (15, 16) aufweist, durch den der Überlastbalken (9) von dem beweglichen Teil (7) getrennt ist, der Aussparungsteil (15, 16) sich sowohl im Bereich des Überlastbalkens (9) als auch im Bereich des beweglichen Teils (7) erstreckt und in dem Aussparungsteil (15, 16) mindestens ein Passstift (4, 5) fixiert ist, der einen definierten Spalt (18, 19) zwischen dem Überlastbalken (9) und dem beweglichen Teil (7) belässt.

2. Überlastsicherung nach Anspruch 1, wobei der Aussparungsteil (15, 16) aus mindestens einer Bohrung besteht, die sich mit einem Teil der Querschnittsfläche im beweglichen Teil (7) des Doppel- oder Mehrfachbiegebalkens (1) und mit dem anderen Teil der Querschnittsfläche in dem Überlastbalken (9) erstreckt.

3. Überlastsicherung nach Anspruch 1 oder 2, wobei sich die Querschnittsfläche des Aussparungsteils (15, 16) im beweglichen Teil (7) des Doppel- oder Mehrfachbiegebalkens (1) über einen Kreisausschnitt von mehr als 180° erstreckt, wobei in diesem Teil ein zylindrischer Passstift (4, 5) fixiert ist.

4. Überlastsicherung nach einem der vorhergehenden Ansprüche, wobei die Querschnittsfläche des Aussparungsteils (15, 16) im Überlastbalken (9) so bemessen ist, dass zwischen den Mantelflächen des Passstiftes (4, 5) und des Überlastbalkens (9) ein definierter Spalt (18, 19) mit vorgebbarem Abstand entsteht, der bei einer vorgegebenen Überlastung die Durchbiegung des beweglichen Teils (7) begrenzt und eine Spaltbreite von 0,05 mm bis 0,5 mm aufweist.

5. Überlastsicherung nach Anspruch 1, wobei der Aussparungsteil (15, 16) aus mindestens einer Rechteck- oder Quadratnut besteht, die sich mit einem Teil der Querschnittsfläche im beweglichen Teil (7) des Doppel- oder Mehrfachbiegebalkens (1) und mit dem anderen Teil der Querschnittsfläche in dem Überlastbalken (9) erstreckt, wobei in einem der Querschnittsflächenteile ein quadratischer oder rechteckförmiger Passstift fixiert ist.

6. Überlastsicherung nach Anspruch 1, wobei die Aussparung (17) aus zwei vertikal beabstandeten Bohrungen (15, 16) und einer seitlich angefügten vertikalen Längsnut (12) sowie zwei vertikal beabstandeten Nuten (14) mit seitlicher Einbuchtung (20) gebildet wird, die den Anschlagkopf (6) umgeben und diesen vom beweglichen Teil (7) des Doppel- oder Mehrfachbiegebalkens (1) trennen.

7. Überlastsicherung nach Anspruch 6, wobei in dem Teil der Aussparung (17) mit den beabstandeten Bohrungen (15, 16) entweder im Teil des Anschlagkopfes (6) oder im Teil des beweglichen Teils (7) des Doppel- oder Mehrfachbiegebalkens (1) jeweils ein Passstift (4, 5) fixiert ist, wobei ein Passstift (4) eine vorgegebene Überlast in Druckrichtung und der andere Passstift (5) eine vorgegebene Überlast in Zugrichtung aufnimmt und diese über den Überlastbalken (9) auf den Kraftaufnahmeteil (8) überträgt.

## Claims

1. An overload protection means for a force measuring element, said force measuring element being provided in the form of a double or multiple bending beam (1) with measuring transducers and including a limiting member which extends transversely to the direction of force application and which is fixedly joined to the clamping end or force receiving portion (8) of the force measuring element, wherein the movable portion (7) of the double or multiple bending beam (1) and the limiting member are spaced apart from each other by a gap such that the deflection of the movable portion (7) is limited, **characterised in that** the limiting member is provided in the form of an overload beam (9) arranged at least in the interspace between two adjacent deformation bodies or bending beams (2, 3) and that a stop head (6) is formed at the end of the overload beam, wherein said stop head (6) projects into a recess (17) in the movable portion (7) of the double or multiple bending beam (1), said recess (17) having at least one recess portion (15, 16) extending transversely to the longitudinal direction of the beam and by which the overload beam (9) is separated from the movable portion (7), said recess portion (15, 16) extending in the region of the overload beam (9) and also in the region of the movable portion (7), and wherein at least one dowel pin (4, 5) which leaves a defined gap (18, 19) between the overload beam (9) and the movable portion (7) is fixed inside the recess portion (15, 16).

2. The overload protection means according to claim 1, wherein the recess portion (15, 16) consists of at least one hole which extends with one part of its cross-sectional area in the movable portion (7) of the double or multiple bending beam (1) and with the other part of its cross-sectional area in the overload beam (9).

3. The overload protection means according to claim 1 or 2, wherein the cross-sectional area of the recess portion (15, 16) in the movable portion (7) of the double or multiple bending beam (1) extends over a sector of more than 180°, wherein a cylindrical dowel pin (4, 5) is fixed inside said portion.

4. The overload protection means according to any one of the preceding claims, wherein the cross-sectional area of the recess portion (15, 16) in the overload beam (9) is dimensioned such that a defined gap (18, 19) with predefinable spacing is produced between the outer surfaces of the dowel pin (4, 5) and the overload beam (9), said gap limiting the deflection of the movable portion (7) in the case of a predefined overload and having a width of 0.05 mm to 0.5 mm.

5. The overload protection means according to claim 1, wherein the recess portion (15, 16) consists of at least one rectangular or square groove which extends with one part of its cross-sectional area in the movable portion (7) of the double or multiple bending beam (1) and with the other part of its cross-sectional area in the overload beam (9), wherein a square or rectangular dowel pin is fixed in one of the parts of its cross-sectional area.

6. The overload protection means according to claim 1, wherein the recess (17) is formed by two vertically spaced apart holes (15, 16) and a laterally adjoining vertical longitudinal groove (12) and by two vertically spaced apart grooves (14) each having a lateral indentation (20), which surround the stop head (6) and separate it from the movable portion (7) of the double or multiple bending beam (1).

7. The overload protection means according to claim 6, wherein a dowel pin (4, 5) is fixed inside the portion of the recess (17) with the spaced-apart holes (15, 16) either in the stop head (6) portion or in the movable portion (7) of the double or multiple bending beam (1), respectively, one dowel pin (4) receiving a predefined overload in the direction of compression and the other dowel pin (5) receiving a predefined overload in the direction of tension and transferring said overload via the overload beam (9) to the force receiving portion (8).

## Revendications

1. Sécurité anti-surcharge pour un élément de mesure de force, lequel est sous forme de double ou multiple barre de flexion (1) dotée de transducteurs de mesure et lequel contient un élément de limitation s'étendant transversalement par rapport à la direction d'introduction de force, ledit élément de limitation étant solidaire de l'extrémité de fixation ou de la partie de captage de force (8) de l'élément de mesure de force, dans laquelle la partie mobile (7) de la double ou multiple barre de flexion (1) et l'élément de limitation sont espacés l'un de l'autre par une fente de telle sorte que la flexion de la partie mobile (7) soit limitée, **caractérisée en ce que** l'élément de limitation est sous forme de barre de surcharge (9) qui est disposée au moins dans l'espace intermédiaire entre deux corps de déformation voisins ou deux barres de flexion (2, 3) voisines et à l'extrémité de laquelle une tête de butée (6) est formée, dans laquelle la tête de butée (6) pénètre dans un évidement (17) de la partie mobile (7) de la double ou multiple barre de flexion (1), l'évidement (17) comprend au moins une partie évidée (15, 16) s'étendant transversalement par rapport à la direction longitudinale de la barre et séparant la barre de surcharge (9) de la partie mobile (7), la partie évidée (15, 16) s'étend à la fois dans la région de la barre de surcharge (9) et dans la région de la partie mobile (7), et au moins une goupille de serrage (4, 5) est fixée dans la partie évidée (15, 16) tout en laissant une fente définie (18, 19) entre la barre de surcharge (9) et la partie mobile (7).

2. Sécurité anti-surcharge selon la revendication 1, dans laquelle la partie évidée (15, 16) se compose d'au moins un alésage qui s'étend dans la partie mobile (7) par une partie de la surface de la section transversale et dans la barre de surcharge (9) par l'autre partie de la surface de la section transversale.

3. Sécurité anti-surcharge selon la revendication 1 ou 2, dans laquelle la surface de la section transversale de la partie évidée (15, 16) s'étend dans la partie mobile (7) de la double ou multiple barre de flexion (1) au-delà d'une section circulaire de plus de 180°, une goupille de serrage (4, 5) de forme cylindrique étant fixée dans cette partie.

4. Sécurité anti-surcharge selon l'une quelconque des revendications précédentes, dans laquelle la surface de la section transversale de la partie évidée (15, 16) dans la barre de surcharge (9) est dimensionnée de manière à former, entre les surfaces latérales de la goupille de serrage (4, 5) et de la barre de surcharge (9), une fente définie (18, 19) avec un intervalle prédéterminé, laquelle limite la flexion de la partie mobile (7) lors d'une surcharge prédéfinie et a une largeur de fente allant de 0,05 mm à 0,5 mm.

5. Sécurité anti-surcharge selon la revendication 1, dans laquelle la partie évidée (15, 16) se compose d'au moins une rainure rectangulaire ou carrée qui s'étend dans la partie mobile (7) de la double ou multiple barre de flexion (1) par une partie de la surface de la section transversale et dans la barre de surcharge (9) par l'autre partie de la surface de la section transversale, dans laquelle une goupille de serrage de forme carrée ou rectangulaire est fixée dans une des parties de la surface de la section transversale.

6. Sécurité anti-surcharge selon la revendication 1, dans laquelle l'évidement (17) est formé de deux alésages (15, 16) espacés verticalement, d'une rainure longitudinale (12) et verticale disposée sur le côté ainsi que de deux rainures (14) espacées verticalement et avec un renfoncement latéral (20), lesquels entourent la tête de butée (6) et séparent celle-ci de la partie mobile (7) de la double ou multiple barre de flexion (1).

7. Sécurité anti-surcharge selon la revendication 6, dans laquelle une goupille de serrage (4, 5), dans la partie de l'évidement (17) avec les deux alésages (15, 16) espacés, est respectivement fixée soit dans la partie de la tête de butée (6), soit dans la partie de la partie mobile (7) de la double ou multiple barre de flexion (1), dans laquelle une goupille de serrage (4) reçoit dans la direction de compression une surcharge prédéfinie et l'autre goupille de serrage (5) reçoit dans la direction de traction une surcharge prédéfinie, celle-ci étant transmise à la partie de captage de force (8) par l'intermédiaire de la barre de surcharge (9).
